# EUROPÄISCHE PATENTSCHRIFT

(11) **EP 4 200 196 B1**
(45) Veröffentlichungstag und Bekanntmachung des Hinweises auf die Patenterteilung: **19.02.2025**
(21) Anmeldenummer: 21743087.5
(22) Anmeldetag: 07.07.2021
(51) Int. Cl.: B62J 1/12, B62J 9/24, B62J 9/23

(54) **SITZVORRICHTUNG FÜR EIN NEIGEFAHRZEUG**
SEAT DEVICE FOR A TILTING VEHICLE
SUPPORT DE SIÈGE POUR UN VÉHICULE INCLINABLE

(30) Priorität: 19.08.2020 DE 102020121719
(43) Veröffentlichungstag der Anmeldung: 28.06.2023
(73) Patentinhaber: Bayerische Motoren Werke Aktiengesellschaft, 80809 München (DE)
(72) Erfinder: HUTTERER, Philipp, 81547 München (DE); GÖTZ, Matthias, 80979 München (DE); ALBRECHT, Stephan, 83703 Gmund am Tegernsee (DE)
(86) Internationale Anmeldenummer: PCT/EP2021/068730
(87) Internationale Veröffentlichungsnummer: WO 2022/037841

(56) Entgegenhaltungen:
- WO-A1-2016/038530
- WO-A1-2017/203544
- DE-A1- 102006 046 005
- JP-A- 2014 213 733
- JP-A- H11 263 261
- JP-U- S5 964 381
- JP-U- S58 190 283
- KR-B1- 100 942 247
- US-A1- 2011 139 843

## Beschreibung

Die Erfindung betrifft eine Sitzvorrichtung für ein Neigefahrzeug, mit mindestens einer Sitzbank, mit mindestens einer Rahmenstruktur, die ein Element eines Fahrzeugrahmens des Neigefahrzeugs umfasst oder am Fahrzeugrahmen festlegbar oder festgelegt ist und an der die Sitzbank festlegbar oder festgelegt ist, und mit mindestens einer Halteeinrichtung, die mindestens ein Tragmittel, das unmittelbar oder mittelbar an der Rahmenstruktur festgelegt ist, und die mindestens eine lösbar am Tragmittel anordenbare oder angeordnete Aufnahmeeinheit umfasst, an der ein Zusatzkörper anordenbar und mittels eines am Zusatzkörper festgelegten Koppelmittels an der Aufnahmeeinheit lösbar festlegbar ist.

Sitzvorrichtungen für Neigefahrzeuge sind in unterschiedlichen Ausführungsformen und Varianten aus dem Stand der Technik bekannt. Zum einen sind Neigefahrzeuge mit Sitzvorrichtungen bekannt, bei denen die Sitzvorrichtung in Gänze eine Sitzbank umfasst, auf der sowohl ein Benutzer des Neigefahrzeugs als auch ein zusätzlicher Fahrgast, ein sogenannter Sozius, anordenbar sind.

Darüber hinaus sind Sitzvorrichtungen für Neigefahrzeuge bekannt, bei denen an der Sitzbank eine Gepäckbrücke oder ein Halter fest und dauerhaft installierbar ist. Diese können die Sitzbank überfangen und reduzieren den Platz für einen zusätzlichen Mitfahrer. Um die Verkehrssicherheit zu gewährleisten, sind diese Gepäckbrücken durch Fachpersonal zu installieren, was sich als umständlich, zeitaufwendig und wenig flexibel erweist.

Sitzvorrichtungen, die den Oberbegriff des Anspruchs 1 offenbaren, sind bekannt aus DE 10 2006 046005.

Eine Aufgabe eines Ausführungsbeispiels der Erfindung ist, eine Sitzvorrichtung für ein Neigefahrzeug vorzuschlagen, an der einfach und verkehrssicher ein Zusatzkörper anordenbar ist.

Diese Aufgabe wird bei einer eingangs genannten Sitzvorrichtung für ein Neigefahrzeug gelöst durch mindestens ein Verriegelungselement, durch das die Aufnahmeeinheit in einer gefügten Anordnung lösbar an dem Tragmittel festlegbar ist, wobei das Verriegelungselement ein Rastmittel umfasst, durch das die Aufnahmeeinheit durch Bilden eines Hintergriffs bezüglich der Fügerichtung am Tragmittel festlegbar ist, mit mindestens einer Sitzbank, mit mindestens einer Rahmenstruktur, die ein Element eines Fahrzeugrahmens des Neigefahrzeugs umfasst oder am Fahrzeugrahmen festlegbar oder festgelegt ist und an der die Sitzbank festlegbar oder festgelegt ist, und mit mindestens einer Halteeinrichtung, die mindestens ein Tragmittel, das unmittelbar oder mittelbar an der Rahmenstruktur festgelegt ist, und die mindestens eine lösbar am Tragmittel anordenbare oder angeordnete Aufnahmeeinheit umfasst, an der ein Zusatzkörper anordenbar und mittels eines am Zusatzkörper festgelegten Koppelmittels an der Aufnahmeeinheit lösbar festlegbar ist.

Dadurch, dass die Sitzvorrichtung ein Tragmittel umfasst, das unmittelbar oder mittelbar an der Rahmenstruktur festgelegt ist, ist ein Element der Halteeinrichtung verkehrssicher an der Sitzvorrichtung dauerhaft montierbar. Dadurch, dass die Aufnahmeeinheit an dem Tragmittel lösbar anordenbar ist und dass an der Aufnahmeeinheit ein Zusatzkörper anordenbar ist, kann die Aufnahmeeinheit und der Zusatzkörper bei Bedarf flexibel durch einen Benutzer des Neigefahrzeugs ohne zusätzliche fachmännische Unterstützung festgelegt werden.

Die Aufnahmeeinheit kann grundsätzlich beliebig an der Tragstruktur festgelegt werden. Es sind Ausführungsformen der Sitzvorrichtung denkbar, bei denen die Aufnahmeeinheit auf einer der Sitzbank abgewandten Seite des Tragmittels anordenbar ist. Solchenfalls ist der Zusatzkörper unterhalb der Sitzbank angeordnet. Ferner sind Ausführungsformen der Sitzvorrichtung denkbar, bei denen die Aufnahmeeinheit an die Sitzbank angrenzend, insbesondere ein Ende der Sitzbank überragend, festlegbar ist. Solchenfalls ist der Zusatzkörper an die Sitzbank angrenzend und die Sitzbank entgegen der Fahrtrichtung fortsetzend angeordnet.

Es werden Ausführungsformen der Sitzvorrichtung bevorzugt, bei denen die Aufnahmeeinheit in der gefügten Anordnung auf der der Sitzbank zugewandten Seite des Tragmittels anordenbar oder angeordnet ist und/oder bei denen die Aufnahmeeinheit die Sitzbank auf einer der Rahmenstruktur abgewandten Seite zumindest abschnittsweise oder in Gänze überfängt und/oder einen die Sitzbank fortsetzenden Abschnitt der Sitzbank umfasst.

Wenn die Aufnahmeeinheit in der gefügten Anordnung auf der der Sitzbank zugewandten Seite des Tragmittels anordenbar ist, bietet sich eine flexible Gestaltung der Sitzbank. Solchenfalls kann der Zusatzkörper beispielsweise einen Abschnitt der Sitzbank umfassen, der an der Aufnahmeeinheit festlegbar ist. Solchenfalls ist die Sitzfläche der Sitzbank erweiterbar. Ferner kann der als zusätzliche Abschnitt der Sitzbank ausgebildete Zusatzkörper eine Rückenlehne oder Dergleichen umfassen.

Wenn die Aufnahmeeinheit in der gefügten Anordnung auf der der Sitzbank zugewandten Seite des Tragmittels angeordnet ist und die Sitzbank auf einer der Rahmenstruktur abgewandten Seite zumindest abschnittsweise überfängt, lässt sich ein Teil der Sitzfläche der Sitzbank zumindest zeitweise zum Transportieren eines Zusatzkörpers verwenden, der beispielsweise eine Tasche, ein Helmfach, einen Transportbehälter (Topcase), eine Gepäckrolle oder Dergleichen umfassen kann. Die Aufnahmeeinheit kann solchenfalls eine Gepäckbrücke bilden.

Darüber hinaus erweist es sich als vorteilhaft, wenn das Tragmittel ein Element der Rahmenstruktur umfasst oder unlösbar an der Rahmenstruktur festgelegt ist oder wenn das Tragmittel lösbar an der Rahmenstruktur festlegbar oder festgelegt ist.

Wenn das Tragmittel ein Element der Rahmenstruktur umfasst, können Tragmittel und Rahmenstruktur ein gemeinsames Bauteil bilden, insbesondere das Tragmittels durch einen Abschnitt der Rahmenstruktur gebildet sein. Hierdurch lässt sich die Sitzvorrichtung bauteilreduziert ausbilden.

Wenn das Tragmittel unlösbar an der Rahmenstruktur festgelegt ist, kann dieses beispielsweise durch Verkleben, Verschweißen oder Dergleichen erfolgen.

Wenn das Tragmittel lösbar an der Rahmenstruktur festlegbar oder festgelegt ist, lässt sich die Sitzvorrichtung auf einfache Weise nachrüsten.

Darüber hinaus können bei Ausführungsformen der Sitzvorrichtung Tragmittel und die Aufnahmeeinheit separat oder voneinander separierbare Bauteile umfassen.

Wenn Tragmittel und Aufnahmeeinheit separate oder voneinander separierbare Bauteile umfassen, kann die Aufnahmeeinheit stets entfernt werden, wenn das Anordnen eines Zusatzkörpers nicht gewünscht oder nicht notwendig ist.

Es erweist sich als vorteilhaft, wenn die Aufnahmeeinheit entlang einer parallel, quer oder schräg zur Längsachse des Neigefahrzeugs verlaufenden Fügerichtung am Tragmittel anordenbar ist. Die Aufnahmeeinheit kann entlang der Fügerichtung auf das Tragmittel aufschiebbar oder auf das Tragmittel aufsteckbar sein.

Das Festlegen durch das Verriegelungselement kann formschlüssig, kraftschlüssig oder reibschlüssig erfolgen. Bei einer Weiterbildung letztgenannter Ausführungsform erweist es sich als vorteilhaft, wenn das Verriegelungselement ein Spannmittel umfasst, durch das die Aufnahmeeinheit mit einer Spannkraft beaufschlagbar und in Richtung auf das Tragmittel spann- oder klemmbar ist, insbesondere wenn das Spannmittel ein Federelement, einen Spannhebel und/oder eine Spann- oder Spreizplatte umfasst.

Solchenfalls kann eine form-, kraft- oder reibschlüssige Verbindung zwischen Aufnahmeeinheit und Tragmittel weiter verbessert werden.

Das Spannmittel kann beispielsweise einen Spannhebel umfassen, der durch manuelles Betätigen von einer geöffneten Position in eine geschlossene Position überführbar ist, wobei das Überführen des Spannhebels von der geöffneten Position in eine geschlossene Position eine vorherschende Klemmkraft erhöht. Darüber hinaus kann ein als Spannhebel ausgebildetes Spannmittel zusätzlich einen Hintergriff der Aufnahmeeinheit mit dem Tragmittel bilden, wenn die Aufnahmeeinheit beispielsweise einen zangenförmigen Abschnitt umfasst, der an einem korrespondierenden Abschnitt der Aufnahmeeinheit angelegt wird und durch Umlegen des Spannhebels der Hintergriff erzeugt wird.

Wenn das Spannmittel beispielsweise ein Federelement umfasst, kann die Aufnahmeeinheit mit durch die Federelemente vorgespannte Rastnasen in korrespondierenden Aussparungen im Tragmittel verrasten.

Wenn das Spannmittel eine Spann- oder Spreizplatte umfasst, kann ebenfalls eine Klemmkraft, die zwischen Aufnahmeeinheit und Tragmittel hergestellt wird, verstärkt werden.

Um den Zusatzkörper auf einfache Weise an der Aufnahmeeinheit festzulegen, erweist es sich als vorteilhaft, wenn das Koppelmittel am Zusatzkörper einen Vorsprung umfasst, durch den der Zusatzkörper an der Aufnahmeeinheit und/oder am Tragmittel lösbar festlegbar oder festgelegt ist und/oder wenn das Koppelmittel ein automatisch oder manuell betätigbares Entriegelungsmittel umfasst durch das das Koppelmittel von der Aufnahmeeinheit und/oder dem Tragmittel lösbar ist.

Durch das Vorsehen eines Koppelmittels am Zusatzkörper in Form eines Vorsprungs sowie durch das Vorsehen eines Entriegelungsmittels, kann der Zusatzkörper auf einfache Weise an der Aufnahmeeinheit festgelegt und wieder gelöst werden.

Die Funktionalität der Sitzvorrichtung lässt sich verbessern, wenn die Sitzvorrichtung mindestens eine Griffeinheit für einen Benutzer des Neigefahrzeugs umfasst, die unmittelbar an der Rahmenstruktur festlegbar oder festgelegt ist und/oder die durch mindestens einen Abschnitt des Tragmittels und/oder der Aufnahmeeinheit gebildet ist.

Wenn die Griffeinheit durch die Rahmenstruktur oder das Tragmittel gebildet ist, ist die Griffeinheit fahrzeugfest ausgebildet. Wenn die Rahmenstruktur die Griffeinheit ausbildet, können Rahmenstruktur und Griffeinheit ein gemeinsames einstückiges Bauteil umfassen. Solchenfalls ist die Sitzvorrichtung bauteilreduziert ausbildbar. Wenn das Tragmittel die Griffeinheit umfasst, kann durch das Anordnen des Tragmittels an der Rahmenstruktur auf einfache Weise eine Griffeinheit nachgerüstet werden. Hierdurch kann ein zusätzlicher Benutzer des Neigefahrzeugs, insbesondere ein Sozius, sich an dem Neigefahrzeug festhalten.

Wenn die Griffeinheit an der Aufnahmeeinheit ausgebildet ist, ist die Griffeinheit gepäckbrückenfest ausgebildet.

Bei einer Weiterbildung letztgenannter Ausführungsformen können Griffe der Griffeinheit relativ zum Neigefahrzeug ortsfest festgelegt sein oder von einer Vorratsstellung in eine Arbeitsstellung überführt werden, in der die Griffe der Griffeinheit durch einen Benutzer des Neigefahrzeugs greifbar sind. Solchenfalls können die Griff teleskopierbar oder schwenkbar ausgebildet sein.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Sitzvorrichtung.

In der Zeichnung zeigt:
- Figur 1: Eine perspektivische Vorderansicht auf ein erstes nicht beanspruchten Ausführungsbeispiel der Sitzvorrichtung;
- Figur 2: Eine Schnittansicht durch die Linie AA gemäß Figur 1;
- Figur 3: Eine perspektivische Detailansicht auf einen Abschnitt einer Aufnahmeeinheit des nicht beanspruchten Ausführungsbeispiels der Figuren 1 und 2;
- Figur 4: Eine perspektivische explosionsartige Darstellung auf ein zweites nicht beanspruchten Ausführungsbeispiel der Sitzvorrichtung;
- Figur 5: Eine explosionsartige perspektivische Darstellung eines beanspruchtenAusführungsbeispiels der Sitzvorrichtung;
- Figur 6: Eine perspektivische Vorderansicht auf ein Ausführungsbeispiel der Sitzvorrichtung;
- Figur 7: Eine Detailansicht eines als Abschnitt einer Sitzbank ausgebildeten Zusatzkörpers gemäß Figur 6;
- Figur 8: Eine Seitenansicht auf ein Ausführungsbeispiel der Sitzvorrichtung.

Die Figuren zeigen Ausführungsbeispiele einer insgesamt mit dem Bezugszeichen 2 versehenen Sitzvorrichtung für ein Neigefahrzeug (in den Figuren nicht explizit dargestellt). Die Sitzvorrichtung 2 umfasst eine Sitzbank 4, auf der ein Benutzer des Neigefahrzeugs sitzend anordenbar ist. Darüber hinaus umfasst die Sitzvorrichtung 2 eine Rahmenstruktur 6, die ein Element eines Fahrzeugrahmens des Neigefahrzeugs umfasst. Die Sitzvorrichtung 2 umfasst eine Halteeinrichtung 8, an der Zusatzkörper 10 anordenbar sind. Hierzu umfasst die Halteeinrichtung 8 ein Tragmittel 12, das bei dem in den Figuren gezeigten Ausführungsbeispielen unmittelbar an der Rahmenstruktur 6 festgelegt ist. An dem Tragmittel 12 der Halteeinrichtung 8 ist lösbar eine Aufnahmeeinheit 14 anordenbar, an der der Zusatzkörper 10 anordenbar und mittels eines am Zusatzkörper 10 festgelegten Koppelmittels 16 in der Aufnahmeeinheit 14 lösbar festlegbar ist.

Die Figuren zeigen Ausführungsbeispiele der Sitzvorrichtung 2, bei denen das Tragmittel 12 der Halteeinrichtung 8 jeweils unlösbar an der Rahmenstruktur 6 festgelegt ist.

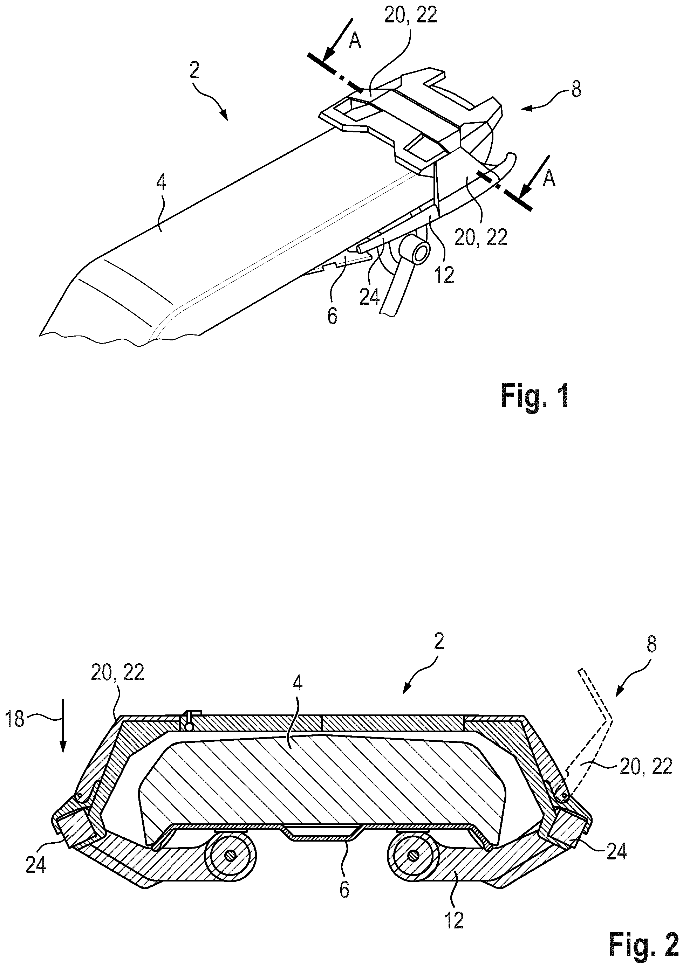

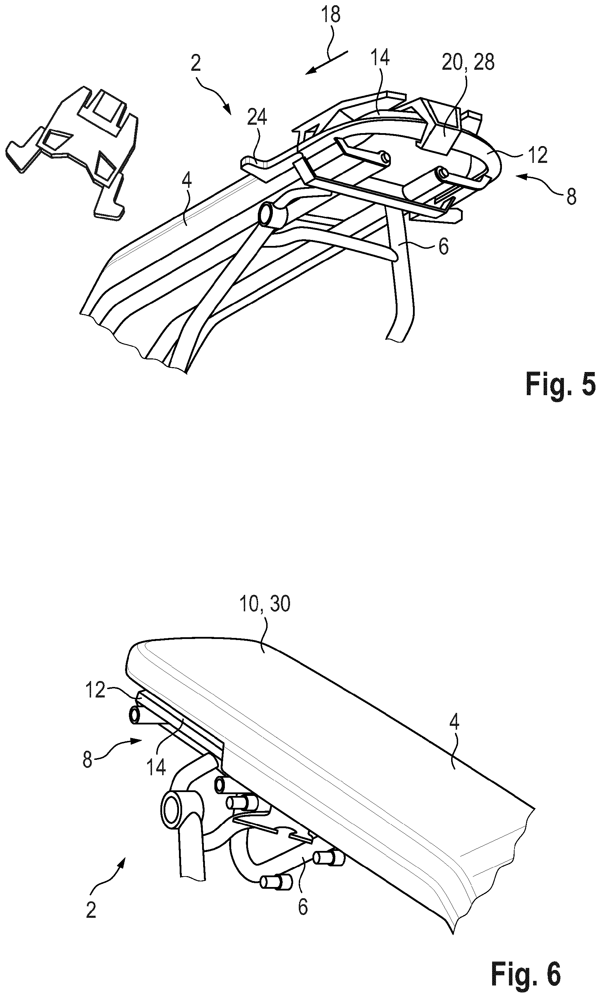

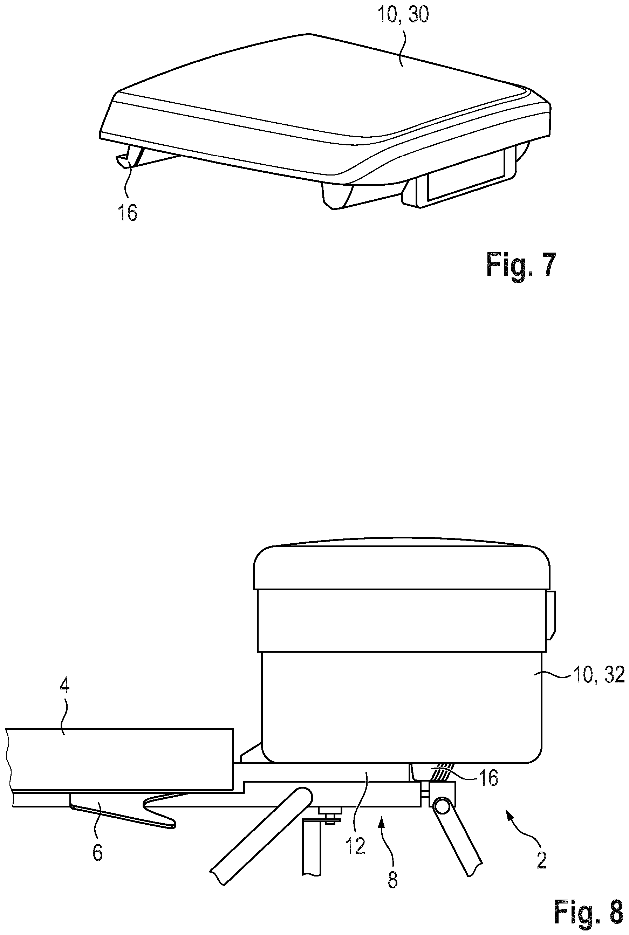

Bei den in den Figuren gezeigten Ausführungsbeispielen ist die Aufnahmeeinheit 14 jeweils auf einer der Sitzbank 4 zugewandten Seite des Tragmittels 12 angeordnet. Bei den Ausführungsbeispielen gemäß der Figuren 1, 4 und 5 überfängt die Aufnahmeeinheit 14 die Sitzbank 4 auf der der Rahmenstruktur 6 abgewandten Seite der Sitzbank 4. Bei den Ausführungsbeispielen gemäß der Figuren 6 und 7 liegt die Aufnahmeeinheit 14 unmittelbar auf der Rahmenstruktur 6 auf der der Sitzbank 4 zugewandten Seite an.

Die Figuren 1 bis 3 zeigen ein nicht beanspruchtes Ausführungsbeispiel der Sitzvorrichtung 2, be der die Aufnahmeeinheit 14 entlang einer quer zur Längsachse des Neigefahrzeugs verlaufenden Fügerichtung 18 am Tragmittel 12 anordenbar ist. Hierzu weist die Aufnahmeeinheit 14 zangenartige Enden auf, die an einem korrespondierenden Abschnitt des Tragmittels 12 mittels Klemmung anordenbar sind. Zum Festlegen der Aufnahmeeinheit 14 umfasst das Ausführungsbeispiel gemäß der Figuren 1 bis 3 ein Verriegelungselement 20, das durch einen Spannhebel 22 gebildet ist.

Das Tragmittel 12 gemäß Ausführungsbeispiel der Figuren 1 bis 3 umfasst zudem eine Griffeinheit 24, die durch einen Benutzer des Neigefahrzeugs manuell greifbar ist. Die Aufnahmeeinheit 14 wird solchenfalls an die Griffeinheit 24 geklammert.

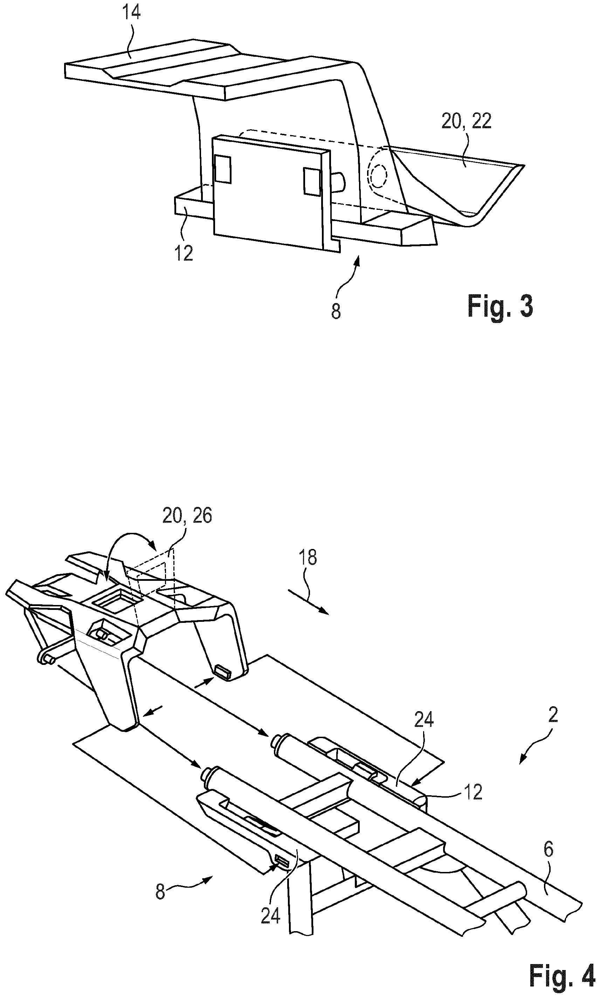

Figur 4 zeigt ein zweites nicht beanspruchten Ausführungsbeispiel der Sitzvorrichtung 2. Auch beim Ausführungsbeispiel gemäß Figur 2 bildet die Aufnahmeeinheit 14 eine Griffeinheit 24. Zum Fügen der Aufnahmeeinheit 14 an das Tragmittel 12 verläuft die Fügerichtung 18 bei dem Ausführungsbeispiel gemäß Figur 4 parallel zur Längsachse des Neigefahrzeugs. Um die Aufnahmeeinheit 14 in einer gefügten Anordnung mit dem Tragmittel 12 zu verbinden, umfasst das Verriegelungselement 20 des Ausführungsbeispiels gemäß Figur 4 eine Spreizplatte 26.

Figur 5 zeigt ein beanspruchtes Ausführungsbeispiel der Sitzvorrichtung 2. Auch beim Ausführungsbeispiel gemäß Figur 5 wird die Aufnahmeeinheit 14 zum Fügen mit dem Tragmittel 12 entlang einer parallel zur Längsachse des Neigefahrzeugs verlaufenden Fügerichtung 18 gefügt. In einer gefügten Anordnung verrastet ein als Rastmittel 28 ausgebildetes Verriegelungselement 20 mit einem Abschnitt des Tragmittels 12.

Beim Ausführungsbeispiel gemäß Figur 5 ist die Griffeinheit 24 gepäckbrückenfest also an der Aufnahmeeinheit 14 ausgebildet.

Die Figuren 6 und 7 zeigen ein Ausführungsbeispiel der Sitzvorrichtung 2. Bei diesem umfasst der Zusatzkörper 10 einen die Sitzbank 4 fortsetzenden Abschnitt 30, der mittels einen als Vorsprung ausgebildeten Koppelmittels 16 an der Aufnahmeeinheit 14 festlegbar ist.

Figur 7 zeigt ein Ausführungsbeispiel der Sitzvorrichtung 2, der dem Ausführungsbeispiel gemäß Figur 6 ähnelt. Anstelle des Festlegens eines die Sitzbank 4 fortsetzenden Abschnitts 30 umfasst der dort anordenbare Zusatzkörper 10 einen Transportbehälter 32.

Durch die Ausbildung der Aufnahmeeinheit 14 als unmittelbar an der Rahmenstruktur 6 auf der der Sitzbank 4 zugewandten Seite der Rahmenstruktur 6 sind wahlweise ein die Sitzbank 4 fortsetzender Abschnitt 30 oder ein Transportbehälter 32 anordenbar.

### Bezugszeichenliste

- 2: Sitzvorrichtung
- 4: Sitzbank
- 6: Rahmenstruktur
- 8: Halteeinrichtung
- 10: Zusatzkörper
- 12: Tragmittel
- 14: Aufnahmeeinheit
- 16: Koppelmittel
- 18: Fügerichtung
- 20: Verriegelungselement
- 22: Spannhebel
- 24: Griffeinheit
- 26: Spreizplatte
- 28: Rastmittel
- 30: Sitzbank fortsetzender Abschnitt
- 32: Transportbehälter

## Patentansprüche

1. Sitzvorrichtung (2) für ein Neigefahrzeug, mit mindestens einer Sitzbank (4), mit mindestens einer Rahmenstruktur (6), die ein Element eines Fahrzeugrahmens des Neigefahrzeugs umfasst oder am Fahrzeugrahmen festlegbar oder festgelegt ist und an der die Sitzbank (4) festlegbar oder festgelegt ist, und mit mindestens einer Halteeinrichtung (8), die mindestens ein Tragmittel (12), das unmittelbar oder mittelbar an der Rahmenstruktur (6) festgelegt ist, und die mindestens eine lösbar am Tragmittel (12) anordenbare oder angeordnete Aufnahmeeinheit (14) umfasst, an der ein Zusatzkörper (10) anordenbar und mittels eines am Zusatzkörper (10) festgelegten Koppelmittels (16) an der Aufnahmeeinheit (14) lösbar festlegbar ist, **gekennzeichnet durch** mindestens ein Verriegelungselement (20), **durch** das die Aufnahmeeinheit (14) in einer gefügten Anordnung lösbar an dem Tragmittel (12) festlegbar ist, wobei das Verriegelungselement (20) ein Rastmittel (28) umfasst, **durch** das die Aufnahmeeinheit (14) **durch** Bilden eines Hintergriffs bezüglich der Fügerichtung (18) am Tragmittel (12) festlegbar ist.

2. Sitzvorrichtung (2) nach Anspruch 1, **dadurch gekennzeichnet, dass** die Aufnahmeeinheit (14) in der gefügten Anordnung auf der der Sitzbank (4) zugewandten Seite des Tragmittels (12) anordenbar oder angeordnet ist und/oder dass die Aufnahmeeinheit (14) die Sitzbank (4) auf einer der Rahmenstruktur (6) abgewandten Seite zumindest abschnittsweise oder in Gänze überfängt und/oder einen die Sitzbank (4) fortsetzenden Abschnitt (30) der Sitzbank (4) umfasst.

3. Sitzvorrichtung (2) nach Anspruch 1 oder 2, **dadurch gekennzeichnet, dass** das Tragmittel (12) ein Element der Rahmenstruktur (6) umfasst oder unlösbar an der Rahmenstruktur (6) festgelegt ist oder dass das Tragmittel (12) lösbar an der Rahmenstruktur (6) festlegbar oder festgelegt ist.

4. Sitzvorrichtung (2) nach mindestens einem der vorhergehenden Ansprüche, **dadurch gekennzeichnet, dass** das Tragmittel (12) und die Aufnahmeeinheit (14) separate oder voneinander separierbare Bauteile umfassen.

5. Sitzvorrichtung (2) nach mindestens einem der vorhergehenden Ansprüche, **dadurch gekennzeichnet, dass** die Aufnahmeeinheit (14) entlang einer parallel, quer oder schräg zur Längsachse des Neigefahrzeugs verlaufenden Fügerichtung (18) am Tragmittel (12) anordenbar ist.

6. Sitzvorrichtung (2) nach Anspruch 5, **dadurch gekennzeichnet, dass** das Verriegelungselement (20) ein Spannmittel umfasst, durch das die Aufnahmeeinheit (14) mit einer Spannkraft beaufschlagbar und in Richtung auf das Tragmittel (12) spann- oder klemmbar ist, insbesondere dass das Spannmittel ein Federelement, einen Spannhebel (22) und/oder eine Spann- oder Spreizplatte (26) umfasst.

7. Sitzvorrichtung (2) nach mindestens einem der vorhergehenden Ansprüche, **dadurch gekennzeichnet, dass** das Koppelmittel (16) am Zusatzkörper (10) einen Vorsprung umfasst, durch den der Zusatzkörper (10) an der Aufnahmeeinheit (14) und/oder am Tragmittel (12) lösbar festlegbar oder festgelegt ist und/oder dass das Koppelmittel (16) ein automatisch oder manuell betätigbares Entriegelungsmittel umfasst durch das das Koppelmittel (16) von der Aufnahmeeinheit (14) und/oder dem Tragmittel (12) lösbar ist.

8. Sitzvorrichtung (2) nach mindestens einem der vorhergehenden Ansprüche, **gekennzeichnet durch** mindestens eine Griffeinheit (24) für einen Benutzer des Neigefahrzeugs, die unmittelbar an der Rahmenstruktur (6) festlegbar oder festgelegt ist und/oder die **durch** mindestens einen Abschnitt des Tragmittels (12) und/oder der Aufnahmeeinheit (14) gebildet ist.

## Claims

1. Seat apparatus (2) for a tilting vehicle having at least one bench type seat (4), having at least one frame structure (6) which comprises an element of a vehicle frame of the tilting vehicle or which can be or is secured to the vehicle frame and can be or is secured to the bench type seat (4), and having at least one retention device (8) which comprises at least one carrier means (12) which is secured directly or indirectly to the frame structure (6) and which comprises at least one receiving unit (14) which can be or is arranged in a releasable manner on the carrier means (12) and on which an auxiliary member (10) can be arranged and can be releasably secured to the receiving unit (14) by means of a coupling means (16) which is secured to the auxiliary member (10), **characterized by** at least one locking element (20) by way of which the receiving unit (14) can be releasably secured to the carrier means (12) in a joined arrangement, wherein the locking element (20) comprises a locking means (28) by way of which the receiving unit (14) can be secured to the carrier means (12) by forming a rear grip with respect to the joining direction (18).

2. Seat apparatus (2) according to Claim 1, **characterized in that** the receiving unit (14) is or can be arranged in the joined arrangement at the side of the carrier means (12) facing the bench type seat (4) and/or in that the receiving unit (14) at least partially or completely overlaps the bench type seat (4) at a side facing away from the frame structure (6) and/or comprises a portion (30) of the bench type seat (4) which continues the bench type seat (4).

3. Seat apparatus (2) according to Claim 1 or 2, **characterized in that** the carrier means (12) comprises an element of the frame structure (6) or is secured to the frame structure (6) in a non-releasable manner or **in that** the carrier means (12) can be or is secured to the frame structure (6) in a releasable manner.

4. Seat apparatus (2) according to at least one of the preceding claims, **characterized in that** the carrier means (12) and the receiving unit (14) comprise components which are separate or can be separated from each other.

5. Seat apparatus (2) according to at least one of the preceding claims, **characterized in that** the receiving unit (14) can be arranged on the carrier means (12) in a joining direction (18) which extends parallel, transversely or obliquely with respect to the longitudinal axis of the tilting vehicle.

6. Seat apparatus (2) according to Claim 5, **characterized in that** the locking element (20) comprises a clamping means, by way of which the receiving unit (14) can be impinged with a clamping force and can be tensioned or clamped in the direction toward the carrier means (12), particularly **in that** the clamping means comprises a resilient element, a clamping lever (22) and/or a clamping or spreader plate (26).

7. Seat apparatus (2) according to at least one of the preceding claims, **characterized in that** the coupling means (16) comprises on the auxiliary member (10) a projection, by means of which the auxiliary member (10) can be or is releasably secured to the receiving unit (14) and/or the carrier means (12) and/or **in that** the coupling means (16) comprises an automatically or manually actuatable unlocking means, by way of which the coupling means (16) is releasable from the receiving unit (14) and/or the carrier means (12).

8. Seat apparatus (2) according to at least one of the preceding claims, **characterized by** at least one gripping unit (24) for a user of the tilting vehicle, which can be or is secured directly to the frame structure (6) and/or which is formed by at least one portion of the carrier means (12) and/or the receiving unit (14).

## Revendications

1. Dispositif de siège (2) pour un véhicule inclinable, comportant au moins une selle (4), comportant au moins une structure de cadre (6) qui comprend un élément d'un cadre du véhicule inclinable ou peut être fixée ou est fixée au cadre de véhicule et à laquelle la selle (4) peut être fixée ou est fixée, et comportant au moins un dispositif de retenue (8), lequel comprend au moins un moyen de support (12) qui est fixé directement ou indirectement à la structure de cadre (6), et lequel comprend au moins une unité de réception (14) pouvant être agencée ou agencée de manière détachable sur le moyen de support (12), unité sur laquelle un corps supplémentaire (10) peut être agencé et peut être fixé de manière détachable à l'unité de réception (14) à l'aide d'un moyen d'accouplement (16) fixé au corps supplémentaire (10), **caractérisé par** au moins un élément de verrouillage (20) par le biais duquel l'unité de réception (14) peut être fixée de manière détachable au moyen de support (12) dans un agencement assemblé, l'élément de verrouillage (20) comprenant un moyen d'encliquetage (28) par le biais duquel l'unité de réception (14) peut être fixée au moyen de support (12) par formation d'une prise par l'arrière par rapport au sens d'assemblage (18).

2. Dispositif de siège (2) selon la revendication 1, **caractérisé en ce que** l'unité de réception (14) peut être agencée ou est agencée dans l'agencement assemblé sur le côté du moyen de support (12) tourné vers la selle (4) et/ou **en ce que** l'unité de réception (14) chevauche au moins partiellement ou complètement la selle (4) sur un côté opposé à la structure de cadre (6) et/ou comprend une partie (30) de la selle (4) qui prolonge la selle (4) .

3. Dispositif de siège (2) selon la revendication 1 ou 2, **caractérisé en ce que** le moyen de support (12) comprend un élément de la structure de cadre (6) ou est fixé de manière non détachable à la structure de cadre (6) ou **en ce que** le moyen de support (12) peut être fixé ou est fixé de manière détachable à la structure de cadre (6).

4. Dispositif de siège (2) selon au moins l'une des revendications précédentes, **caractérisé en ce que** le moyen de support (12) et l'unité de réception (14) comprennent des composants séparés ou pouvant être séparés les uns des autres.

5. Dispositif de siège (2) selon au moins l'une des revendications précédentes, **caractérisé en ce que** l'unité de réception (14) peut être agencée sur le moyen de support (12) le long d'un sens d'assemblage (18) s'étendant parallèlement, transversalement ou de manière oblique par rapport à l'axe longitudinal du véhicule inclinable.

6. Dispositif de siège (2) selon la revendication 5, **caractérisé en ce que** l'élément de verrouillage (20) comprend un moyen de serrage par le biais duquel l'unité de réception (14) peut être soumise à une force de serrage et peut être tendue ou serrée en direction du moyen de support (12), en particulier **en ce que** le moyen de serrage comprend un élément ressort, un levier de serrage (22) et/ou une plaque de serrage ou d'écartement (26).

7. Dispositif de siège (2) selon au moins l'une des revendications précédentes, **caractérisé en ce que** le moyen d'accouplement (16) comprend, sur le corps supplémentaire (10), une saillie par le biais de laquelle le corps supplémentaire (10) peut être fixé ou est fixé de manière détachable à l'unité de réception (14) et/ou au moyen de support (12) et/ou **en ce que** le moyen d'accouplement (16) comprend un moyen de déverrouillage pouvant être actionné automatiquement ou manuellement, par le biais duquel le moyen d'accouplement (16) peut être détaché de l'unité de réception (14) et/ou du moyen de support (12).

8. Dispositif de siège (2) selon au moins l'une des revendications précédentes, **caractérisé par** au moins une unité de préhension (24) pour un utilisateur du véhicule inclinable, laquelle peut être fixée ou est fixée directement à la structure de cadre (6) et/ou laquelle est formée par au moins une partie du moyen de support (12) et/ou de l'unité de réception (14).
